# EUROPEAN PATENT APPLICATION

(11) **EP 4 461 673 A1**
(43) Date of publication of application: **13.11.2024**
(21) Application number: 24161971.7
(22) Date of filing: 07.03.2024
(51) Int. Cl.: B65G 1/137, B65G 43/00

(54) **WARE STORAGE SYSTEM INCLUDING A MONITORING FUNCTION**

(30) Priority: 29.03.2023 IT 202300006033
(71) Applicant: Toyota Material Handling Manufacturing Italy S.p.A, 40132 Bologna (IT)
(72) Inventor: PESSO, Tommaso, 40132 Bologna (IT)
(74) Representative: Hoffmann Eitle

(57) **Abstract**

A ware storage system including a plurality of seats, wherein each of the plurality of seats is configured to receive a ware item to be stored in the ware storage system, the ware storage system comprising an optical sensor configured to collect data relating to at least a spatial feature of the plurality of seats and/or of the ware items stored therein; wherein the ware storage system includes transport means for displacing the optical sensor with respect to the plurality of seats.

## Description

### [Technical Field]

The present invention relates to a ware storage system, and more particularly to a ware storage system for a warehouse capable of automatically gathering data related to seats and ware items stored therein.

### [Background]

Warehouses are usually large-scale buildings for storing a large amount of ware items. Warehouses are used by manufacturers, importers, exporters, wholesalers, transport businesses, customs, and the like. The ware items are stored in seats, wherein a seat refers to a storage compartment e.g. in a storage rack or the like. Typically, workers will operate cranes and forklifts in order to move one or more of the ware items, which are often placed on pallets and then loaded into the seats. Ware items can include any raw materials, packing materials, spare parts, components, or finished goods associated with agriculture, manufacturing, and production or the like.

For the workers working at the warehouse, there is, however, a risk of injury or worse arising, for example, from improperly secured ware items falling out of their respective seats while a worker is below the seat. For example, a worker driving a forklift truck might face a dangerous condition when driving close to a seat in which a ware item is not properly stored, e.g. a ware item that is not properly positioned inside the respective seat; in similar cases, an accidental collision of the mast of the forklift truck with an improperly stored ware item might occur, thus causing the fall of the ware item out of its respective seat and, therefore, a dangerous situation for the worker. Thus, there is a need for improving the safety conditions of workers operating in the warehouse.

### [Summary]

In view of the above, an object of the present invention is to improve the safety conditions of workers in a warehouse. In some embodiments, a further object is to provide a ware storage system that enables an efficient and/or constant monitoring of dangerous situations in a warehouse. In some embodiments, a further object is to provide a ware storage system that enables a cost-effective and proper monitoring of the current situation of the ware storage system, e.g. by employing a low number of sensors.

The novel ware storage system for a warehouse is capable of automatically gathering data related to spatial features of seats and/or of ware items stored therein in order to monitor a current condition of the seats and ware items.

One embodiment relates to a ware storage system including a plurality of seats, wherein each of the plurality of seats is configured to receive a ware item to be stored in the ware storage system, the ware storage system comprising an optical sensor configured to collect data relating to at least a spatial feature of the plurality of seats and/or of the ware items stored therein; wherein the ware storage system includes transport means for displacing the optical sensor with respect to the plurality of seats.

By automatically recording the data relating to at least the spatial feature of the plurality of seats and/or of the ware items stored in the plurality of seats, the ware storage system is able to identify potential hazards for workers arising from displaced ware items, damaged ware items, unsecured seats, and the like, thereby improving the safety for the workers at the warehouse. The data is collected automatically using the optical sensor that is movable with respect to the ware storage seats, thereby efficiently monitoring the seats and ware items stored therein.

Further preferred embodiments are described in the dependent claims.

### [Brief description of the drawings]

Embodiments of the present invention, which are presented for better understanding the inventive concepts, but which are not to be seen as limiting the invention, will now be described with reference to the figures in which:
- Fig. 1: shows a perspective schematic view of a ware storage system comprising a storage rack with ware items stored therein and transport means with an optical sensor;
- Fig. 2A: shows a side view of an embodiment of the optical sensor and transport means comprising a rail and a carriage;
- Fig. 2B: shows a side view of an embodiment of the optical sensor and transport means comprising a rail, a carriage and rotatable arm;
- Fig. 2C: shows a side view of an embodiment of the optical sensor and transport means comprising a rail, a carriage and extendable and contractable arm;
- Fig. 3: shows a plan view of the ware storage system comprising two storage racks and transport means for displacing the optical sensor between a plurality of points of observation;
- Fig. 4A: shows an example for an anomaly in which a ware item is not properly placed in the seat;
- Fig. 4B: shows an example for an anomaly in which a ware item is deformed/damaged; and
- Fig. 4C: shows an example for an anomaly in which a boundary of the seat is deformed/damaged.

### [Detailed description]

The present invention shall now be described in conjunction with specific embodiments. The specific embodiments serve to provide the skilled person with a better understanding but are not intended to in any way restrict the scope of the invention, which is defined by the appended claims. In particular, the embodiments described independently throughout the description can be combined to form further embodiments to the extent that they are not mutually exclusive.

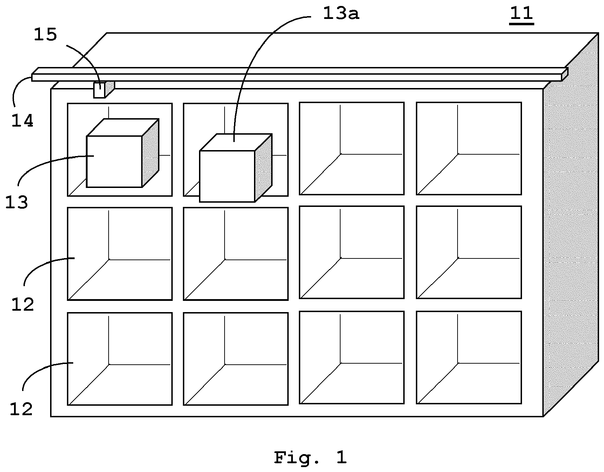

Fig. 1 shows a ware storage system 11 including a plurality of seats 12, wherein each of the plurality of seats 12 is configured to receive a ware item 13 to be stored in the ware storage system. The ware storage system 11 is configured to interact with one or more industrial trucks (for example a forklift truck) for loading/unloading the ware item to/from the plurality of seats of the ware storage system 11. The seats 12 may be arranged in rows and columns of a storage rack of the ware storage system. A storage rack may comprise shelves and supporting columns. A warehouse employing the ware storage system 11 may comprise a plurality of storage racks. For example, a storage rack may have a substantially planar extension; the plurality of storage racks may be positioned parallel to each other and spaced apart from each other to define one or more corridors between two successive storage racks; the corridors are preferably large enough to allow the driving of an industrial truck along the corridor. Each seat 12 may serve as a storage compartment for a ware item 13. For example, a ware item 13 may correspond to one or more goods placed on a pallet, a container, a package or the like. Ware items 13 may be loaded and unloaded from the seats 13 using a crane or forklift. The crane or forklift may be operated autonomously or by a worker.

In the example of Fig. 1, the ware item 13 in the top row and left most column is properly placed within the corresponding seat 12. The ware item 13a in the top row and second column from the left is, however, not properly placed within the corresponding seat 12 because it protrudes outside the corresponding seat 12. This might lead to a hazardous situation, as the ware item 13a may be unstable and may fall out of the seat in case of collision, e.g. with the mast of a forklift.

The ware storage system further comprises an optical sensor 15 configured to collect data relating to at least a spatial feature of the plurality of seats and/or of the ware items stored therein. The optical sensor 15 may collect the data by capturing one or more visual datasets such as one or more images, one or more videos and/or one or more 3-dimensional point clouds representing the plurality of seats and/or of the ware items stored therein. The one or more visual datasets may be combined and/or processed to derive the spatial feature.

The ware storage system may be configured to adapt the field of view (FOV) of the optical sensor 15. For example, the optical sensor 15 may be arranged to capture visual datasets corresponding to more than one viewing direction such as a forward and a backward direction. In other words, the optical sensor 15 may be configured to vary a viewing direction therefore among a plurality of viewing direction; preferably the plurality of viewing direction includes two opposite viewing directions. In this manner, the optical sensor 15 may capture visual datasets corresponding to two storage racks opposite to one another, thereby increasing the efficiency of the data collecting.

Spatial features of a plurality of objects relate to spatial characteristics of the plurality of objects, wherein each of the spatial characteristics is descriptive of at least one of an individual object of the plurality of objects and/or a combination of two or more objects of the plurality of objects. The object may be a seat 12 or a ware item 13.

For example, a spatial characteristic descriptive of an individual object may be the size, shape or orientation of the individual object. For example, a spatial characteristic descriptive of a combination of two or more objects may be the relative positioning or movement of the two or more objects with respect to each other or a total volume occupied by the two or more objects.

The ware storage system 11 includes transport means 14 for displacing the optical sensor 15 with respect to the plurality of seats. The transport means 14 may displace the optical sensor 15 along a predetermined path. The predetermined path may lead in parallel to one or more storage racks in the warehouse. The transport means 14 may be configured to move the optical sensor 15 forward and backward along the predetermined path. The transport means 14 may bring the optical sensor 15 to a halt at predetermined locations along the predetermined path. For example, a predetermined location may be in front of a column of seats in a storage rack. The predetermined locations may be points of observation 16 at which the optical sensor 15 may capture one or more visual datasets. Alternatively, the transport means 14 may not stop at the points of observation 16, but simply displace the optical sensor 15 along a path including a plurality of points of observation 16.

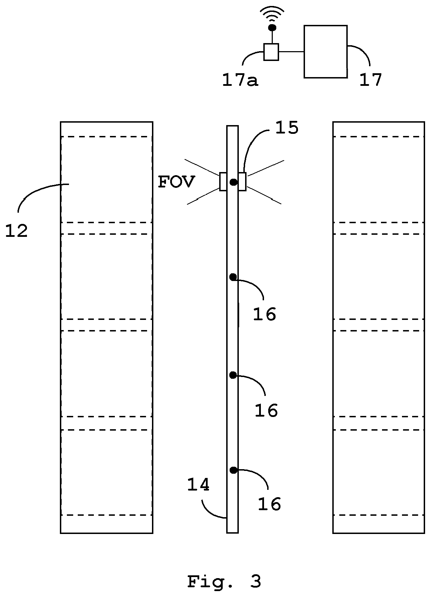

The transport means 14 may include a rail 141 and a carriage 142 mounted on the rail 141 to be movable along the rail 141, wherein the carriage 142 supports the optical sensor 15. The rail 141 may be formed from one or more rigid and elongated beams. The rail 141 may be mounted to be connected to the ceiling or to the floor of the warehouse in which the ware storage system is located, or may be mounted directly to a storage rack. The ceiling and/or the floor of the warehouse may form part of the ware storage system. The rail 141 may span across a plurality of storage racks of the warehouse, thereby allowing the optical sensor 15 to move between the plurality of storage racks. The rail 141 defines a predetermined path along which the optical sensor 15 is displaced by the transport means 14. The rail 141 may be rectilinear and be parallel to a storage rack. The rail 141 may be positioned above a corridor positioned between two parallel storage racks as shown in Fig. 3.

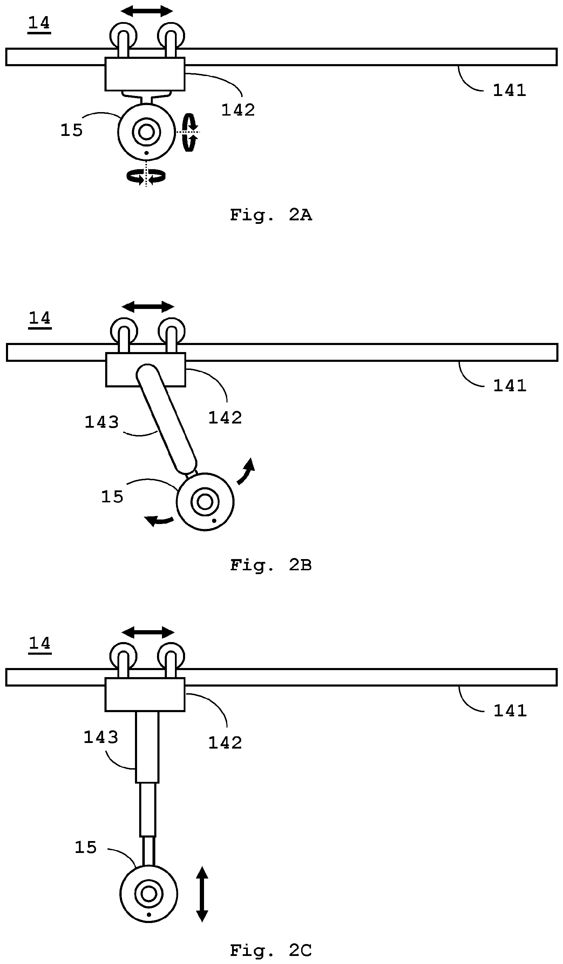

Fig. 2A shows an example of the transport means 14 of Figs. 1 and 2, wherein the transport means 14 include a rail 141 and a carriage 142 with the optical sensor 15 being mounted beneath the carriage 142. The rail 141 may be fixed with respect to the plurality of seats 12. In this manner, the optical sensor 15 may be able to collect data from a consistent distance from and angle to the plurality of seats, thereby improving the consistency of quality of the data collected. In the embodiment of Fig. 2A, the optical sensor 15 is configured to vary the field of view, i.e. is configured to vary its orientation by rotating around a horizontal axis and/or a vertical axis with respect to the carriage 142.

The carriage 142 may be motorized. For example, the carriage 142 may comprise one or more wheels or cogs for displacing the carriage 142 along the rail 141 as shown in Fig. 2A. The motor of the carriage 142 may be powered by an on-board battery or by drawing current from the rail 141, wherein the rail 141 comprises a conductor rail that is energized.

The carriage 142 may comprise an arm 143 for displacing the optical sensor 15 mounted thereto in a direction different from the direction of the rail 141. The carriage 142 may move the arm 143 in a circular motion as shown in Fig. 2B, thereby allowing the optical sensor 15 to perform a sweeping motion (as indicated by the arrows). Alternatively or in addition thereto, the carriage 142 may extend or contract the arm 143 as shown in Fig. 2C, thereby allowing the optical sensor 15 to move along the direction of the arm 143 (as indicated by the arrows). In this manner, the optical sensor 15 may be positioned with greater freedom.

Furthermore, the rail 141 may be shaped so that the carriage 142, when moving along the rail, follows a path that includes a plurality of points of observation 16, wherein each point of observation 16 corresponds to one of the plurality of seats 12, wherein the mutual position of each point of observation 16 with respect to the corresponding seat is the same for all points of observation 16. In other words, the perspective of the optical sensor 15 at each of the plurality of points of observation 16 is the same for all points of observation 16. In this manner, the visual datasets captured by the optical sensor 15 may represent the respective seats 12 and/or ware items 13 stored therein from a common perspective, thereby improving the consistency of quality of the data collected.

Fig. 3 shows a plan view of the ware storage system 11 comprising two storage racks and transport means 14 for displacing the optical sensor 15 between a plurality of points of observation 16. The transport means 14 may bring the optical sensor 15 to a halt at each of the plurality of points of observation 16. Then, the optical sensor 15 may capture a visual dataset (i.e. data relating to at least a spatial feature of the plurality of seats and/or of the ware items stored therein) of one or more seats 12 and/or ware items 13 stored therein. The one or more seats 12 may be located opposite to the current point of observation. The optical sensor 15 may be configured to capture visual datasets of each of the opposing storage racks. For example, the optical sensor 15 may rotate by 180° around a vertical axis after capturing a visual dataset corresponding to one storage rack in order to afterwards capture another visual dataset corresponding to the other storage rack on the opposite side.

The rail 141 may be a rectilinear rail positioned parallel to a sequence of seats 12 positioned along a rectilinear row. In this manner, the optical sensor 15 may be able to capture visual datasets from a common height and thus from a common perspective, thereby improving the consistency of quality of the data collected.

When the seats are formed in a rack including a plurality of rows and a plurality of columns, the rail 141 may be positioned close to and above the highest row of the rack. By placing the rail 141 close to and above the highest row of the (storage) rack, the rail 141 does not interfere with loading and unloading operations performed at the storage rack.

The optical sensor 15 may include one of: a camera, a stereo camera, a LIDAR sensor or any combination thereof. The camera may be used to capture one or more visual datasets such as one or more images or one or more videos representing the plurality of seats 12 and/or of the ware items 13 stored therein. The stereo camera may be used to capture images or videos corresponding to more than one viewing direction such as a forward and a backward direction. The LIDAR (light detection and ranging) sensor may be used to capture one or more 3-dimensional point clouds representing the plurality of seats 12 and/or of the ware items 13 stored therein.

The ware storage system may further include a control unit 17 (schematically shown in Fig. 3) coupled to the optical sensor 15, the control unit 17 being configured to process the data relating to at least a spatial feature to determine an anomaly relating to one or more of the plurality of seats 12, wherein the anomaly includes any of: an anomaly relating to a position of a ware item 13 in the seat 12, an anomaly relating to a shape of the ware item 13 received in the seat 12, or an anomaly relating to a boundary of the seat 12, or any combination thereof. In other words, the control unit 17 may be configured to analyze the data collected by the optical sensor 15 and at least one spatial feature in order to determine an anomaly associated with one or more of the plurality of seats 12.

The control unit 17 may comprise a processor (e.g. a CPU), a memory (e.g. a random-access memory, RAM) and a storage for storing computer-readable instructions which, when executed by the processor, cause the processor to perform an operation of the control unit, in particular any of the operations performed by the control unit as described in the present disclosure. The control unit 17 may include one or more controller devices organized in a distributed architecture. The one or more controller device may be located remotely or locally, i.e. inside and/or outside a warehouse in which the ware storage system is located.

The control unit 17 may be physically coupled to the transport means 14. Alternatively, the control unit 17 may be wirelessly coupled to the transport means 14 and/or to the optical sensor 15. For example, data and control commands may be exchanged between the control unit 17 and the transport means 14 and/or to the optical sensor 15 using a local area network of the warehouse. Accordingly, the transport means 14 and/or to the optical sensor 15 may include a transceiver unit (not shown) for transmitting the collected data to the control unit 17 and/or to receive a command from the control unit (e.g. a command relating to the activation of the transport means and/or of the optical sensor). The transceiver unit associated to the optical sensor 15 may advantageously be wireless. The control unit 17 may be configured to determine spatial features and or an anomaly based on the data collected by the optical sensor 15 by using any known data processing method, e.g. any known image processing methods.

The anomaly may further relate to an orientation of the ware item 13 in the seat 12 and/or a movement of the ware item 13 within the seat 12. When an anomaly is detected, it may indicate a potential hazard for workers in the vicinity of the corresponding one or more seats 12. In this manner, it is possible to obviate a potential bodily harm to a worker arising from the hazard.

Furthermore, when an anomaly is detected, the ware storage system 11 may issue a warning. The warning may indicate a type of hazard corresponding to the detected anomaly and a location of the affected seat 12. The warning may be transmitted to a user of the ware storage system 11 such as a supervisor of the warehouse and/or a pilot of an industrial truck. The warning may be transmitted to the workers in the warehouse. The warning may be an audible warning such as an alarm. Alternatively or in addition thereto, the warning may be a visual warning such as flashing warning light. The warning may be transmitted to an industrial truck by means of a transceiver 17a coupled to the control unit 17, e.g. as information relating to an anomaly of one ore seats. The transceiver 17a may be advantageously a wireless transceiver 17a. The transceiver (or transceiver unit) 17a may be configured to receive the data collected by the optical sensor 15 and to transmit a command signal to the transport means 14.

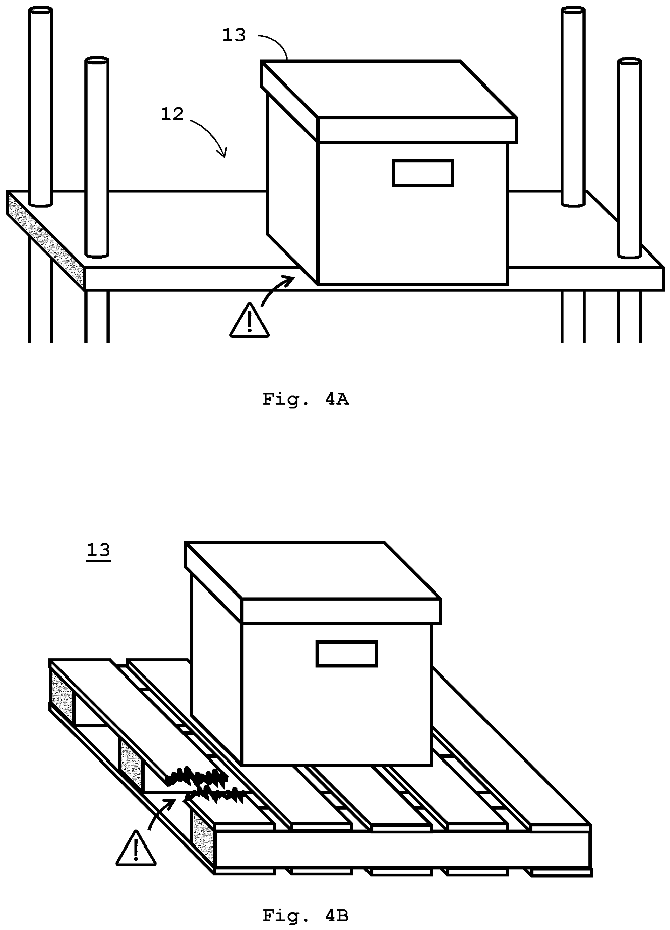

Fig. 4A shows an example for an anomaly in which a ware item 13 is not properly placed in the seat 12. More specifically, the ware item 13 protrudes beyond a front edge of a shelf of the seat 12 in which the ware item 13 is placed. Hence, the anomaly indicates a potential hazard related to the risk of the ware item 13 falling out of the seat 12.

Fig. 4B shows an example for an anomaly in which a ware item 13 is deformed and/or damaged. More specifically, the ware item 13 comprises a pallet and a box, wherein a plank of the pallet on which the box is placed is broken. Hence, the anomaly indicates a hazard related to the ware item 13 being damaged and thus lacking structural integrity.

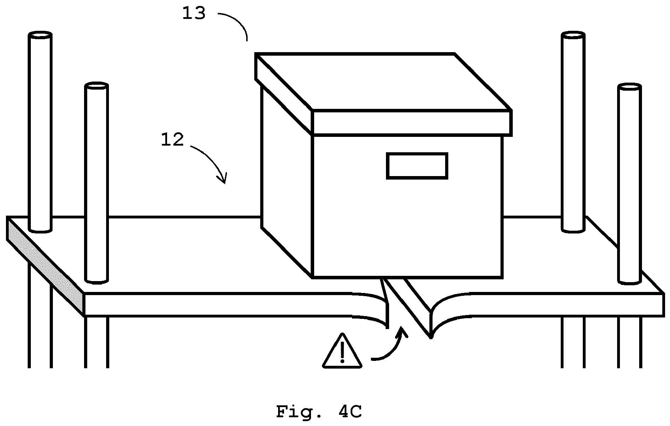

Fig. 4C shows an example for an anomaly in which a boundary of the seat 12 is deformed and/or damaged. More specifically, the shelf on which the ware item 13 is placed has a crack. Hence, the anomaly indicates a hazard related to the shelf being damaged and thus lacking structural integrity.

The control unit 17 may be configured to determine the anomaly by processing the data relating to at least a spatial feature by means of trained neural network. The neural network may comprise a model that is trained in advance using training data. The training data may correspond to spatial features of a plurality of seats and/or of ware items stored therein, wherein each of the spatial features is associated with a corresponding truth label. The truth label may indicate the presence or absence of an anomaly associated with the corresponding spatial feature. In case of a presence of an anomaly, the truth label may further indicate a type of the anomaly. The neural network (model) may be trained to associate spatial features with anomalies based on the truth labels.

The trained neural network may be refined using data collected by the ware storage system 11 during its operation, wherein a worker additionally inputs feedback information into the control unit. The feedback information may indicate whether or not an anomaly detected by the control unit was correctly identified or not. In this manner, the set of training data for the neural network can be steadily increased during the operation of the ware storage system 11, thereby further improving the efficiency and reliability of the trained neural network.

The control unit 17 may be further communicably coupled to the transport means 14 to control a movement of the optical sensor 15. The control unit may be configured to command a periodical movement of the optical sensor 15 to monitor periodically each of the plurality of seats 12. In other words, the control unit 17 may transmit, e.g. via the transceiver unit 17a, commands to the transport means 14 such as to control periodical movements of the optical sensor 15 for monitoring each of the plurality of seats 12. For example, the control unit may control the transport means 14 to monitor each of the plurality of seats 12 once per day. The periodicity of the monitoring may be indicated by a preset schedule. The schedule may be set by a user of the ware storage system 11 such as a supervisor of the warehouse.

The ware storage system 11 may further comprise transmitting means for transmitting an information relating to a determined anomaly to an industrial truck configured for loading/unloading a ware item 13 from/to the plurality of seats 12; the transmitting means to transmit information to the industrial truck can correspond to the transceiver unit 17a as above described, however also a different transceiver may be used. The information may indicate a location of the seat 12 affected by the anomaly. The information may indicate a recommended safety precaution, a recommended solution to the anomaly, a warning, or the like. For example, the information relating to the determined anomaly may be displayed on a display of the industrial truck. In this manner, a worker operating the industrial truck is informed about a potential hazard related to the anomaly. In an embodiment, the transmitting means of the ware storage system 11 may correspond to the transceiver 17a above described.

The control unit 17 may be configured to associate a determined anomaly to a position of the seat for which the anomaly has been determined and to store this association in a database. For example, the association may be performed based on the known position of the optical sensor at the time of collecting the data relating to at least a spatial feature of a seat and/or of a ware item in the seat. In this case, the optical sensor may be configured to generate data relating to at least a spatial feature of a seat and/or of a ware item in the seat (e.g. an image data) with a spatial stamp indicating of a position of the respective seat and/or of a ware item to which the collected data relates. For example, the spatial stamp may relate to point of observation at which the data relating to at least a spatial feature is collected. In this manner, the control unit 17 can be configured to maintain and update stored information in which anomalies are stored in association with respective positions of the seat having an anomaly. Based on this information, the control unit may be configured to generate information relating to a determined anomaly to be transmitted to an industrial truck, wherein the information relating to a determined anomaly may include e.g. an image of a group of seats (e.g. a group of seats facing on the same corridor) in which the seats having an anomaly are highlighted.

### [Reference Signs]

- 11: ware storage system
- 12: seat
- 13: ware item
- 14: transport means
- 141: rail
- 142: carriage
- 143: arm
- 15: optical sensor
- 16: point of observation
- 17: control unit
- 17a: transceiver means

## Claims

1. A ware storage system (11) including a plurality of seats (12), wherein each of the plurality of seats (12) is configured to receive a ware item (13) to be stored in the ware storage system (11), the ware storage system (11) comprising an optical sensor (15) configured to collect data relating to at least a spatial feature of the plurality of seats (12) and/or of the ware items (13) stored therein; wherein the ware storage system (11) includes transport means (14) for displacing the optical sensor (15) with respect to the plurality of seats (12).

2. A ware storage system (11) according to claim 1,
wherein the ware storage system is configured to interact with an industrial truck for loading/unloading the ware item to/from the plurality of seats of the ware storage system.

3. A ware storage system (11) according to any of the preceding claims, wherein the transport means (14) includes a rail (141) and a carriage (142) mounted on the rail (141) to be movable along the rail (141), wherein the carriage (142) supports the optical sensor (15) .

4. A ware storage system (11) according to claim 3,
wherein the rail (141) is configured to be connected to the ceiling or to the floor of a warehouse in which the ware storage system is located, or is mounted directly to a storage rack of the ware storage system.

5. A ware storage system (11) according to any of claims 3-4, wherein the rail spans across a plurality of storage racks of the warehouse.

6. A ware storage system (11) according to any of claims 3-5, the rail (14) is shaped so that the carriage, when moving along the rail, follows a path that includes a plurality of points of observation (16), wherein each point of observation (16) corresponds to one of the plurality of seats (12), wherein the mutual position of each point of observation (16) with respect to the corresponding seat is the same for all points of observation (16).

7. A ware storage system (11) according to any of claims 3 to 6, wherein the rail (141) is a rectilinear rail positioned parallel to a sequence of seats (12) positioned along a rectilinear row.

8. A ware storage system (11) according to any of claims 3 - 7, wherein the seats (12) are formed in a rack including a plurality of rows and a plurality of columns, the rail (141) being positioned above the highest row of the rack.

9. A ware storage system (11) according to claim 8,
wherein the rail (141) is positioned close to the highest row of the rack.

10. A ware storage system (11) according to any of claims 1 - 9, wherein the optical sensor (15) includes one of: a camera, a stereo camera, a LIDAR sensor or any combination thereof.

11. A ware storage system (11) according to any of claims 1 - 10, further including a control unit (17) coupled to the optical sensor (15), the control unit being configured to process the data relating to at least a spatial feature to determine an anomaly relating to one or more of the plurality of seats (12), wherein the anomaly includes any of: an anomaly relating to a position of a ware item (13) in the seat (12), an anomaly relating to a shape of the ware item (13) received in the seat (12), or an anomaly relating to a boundary of the seat (12), or any combination thereof.

12. A ware storage system (11) according to claim 11, wherein the control unit (17) is configured to determine the anomaly by processing the data relating to at least a spatial feature by means of trained neural network.

13. A ware storage system (11) according to any of claims 1 - 12, further including a control unit (17) coupled to the transport means (14) to control a movement of the optical sensor (15), wherein the control unit is configured to command a periodical movement of the optical sensor (15) to monitor periodically each of the plurality of seats (12).

14. A ware storage system (11) according to any of claims 1 - 13, further comprising transmitting means (17a) for transmitting an information relating to a determined anomaly to an industrial truck configured for loading/unloading a ware item (13) from/to the plurality of seats (12).
